Europäisches Patentamt

European Patent Office

Office européen des brevets

(11) Numéro de publication: **0 188 030 B1**

# FASCICULE DE BREVET EUROPEEN

(45) Date de publication de fascicule du brevet: **25.03.92**   (51) Int. Cl.5: **H04N 7/167**

(21) Numéro de dépôt: **85202124.5**

(22) Date de dépôt: **31.12.85**

---

(54) **Procédé de codage et de décodage d'informations audio et appareil pour sa mise en oeuvre.**

---

(30) Priorité: **09.01.85 BE 214310**

(43) Date de publication de la demande:
**23.07.86 Bulletin  86/30**

(45) Mention de la délivrance du brevet:
**25.03.92 Bulletin  92/13**

(84) Etats contractants désignés:
**AT BE CH DE FR GB IT LI LU NL SE**

(56) Documents cités:
**EP-A- 0 018 783**
**EP-A- 0 103 339**
**EP-A- 0 119 945**
**GB-A- 1 590 579**
**US-A- 4 070 693**

(73) Titulaire: **Radio - Télévision belge de la Communauté française**
**Cité de la Radio - Télévision Boulevard Auguste Reyers 52**
**B-1040 Bruxelles(BE)**

(72) Inventeur: **Goray, Eddy Charles**
**Avenue A. Jonnart 39**
**B-1200 Bruxelles(BE)**
Inventeur: **Nelen, Jean-Claude Simon**
**rue Brunard 19**
**B-1090 Bruxelles(BE)**
Inventeur: **Joris, Pierre Joseph**
**rue Saint Joseph 47**
**B-1140 Bruxelles(BE)**

(74) Mandataire: **Pieraerts, Jacques et al**
**Bureau Gevers S.A. Rue de Livourne 7, B.1**
**B-1050 Bruxelles(BE)**

---

Rank Xerox (UK) Business Services

## Description

La présente invention concerne un procédé de codage et de décodage d'un signal audio dans un système de transmission d'informations, en particulier d'un signal audio compris dans un signal de télévision et plus particulièrement pour la télévision à péage, comportant :

a) pour le codage
- la conversion d'un signal audio analogique à transmettre en un signal audio numérique,
- le découpage du signal audio numérique en tranches égales,
- la transposition de l'ordre des bits de chaque tranche afin de former chaque fois une tranche transposée,

b) pour le décodage
- la transposition inverse de tranches transposées en tranches qui restituent l'ordre initial des bits, et
- la conversion des tranches restituant l'ordre initial des bits en un signal audio analogique.

On connaît par la EP-A-0.018.783 un procédé de codage et de décodage du genre précité, dans lequel est effectuée de façon pseudo-aléatoire une rotation cyclique de chaque segment obtenu par division du signal audio continu. Cette rotation cyclique ne modifie pas l'ordre naturel des informations contenues dans un segment. Cette solution de codage n'est pas fiable du fait que dès que l'on connaît la façon pseudo-aléatoire de coder, on peut retrouver les informations codées dans leur ordre naturel.

Le but de la présente invention consiste à fournir un codage fiable, dont il est compliqué de découvrir la façon dont les informations ont été codées sur base de ces informations reçues.

A cet effet, le procédé suivant l'invention comporte :

a) pour le codage
- le prélèvement d'une fraction prédéterminée d'une tranche transposée immédiatement adjacente,
- la formation d'une tranche combinée comportant la tranche transposée et ladite fraction prédéterminée, et
- la compression de la tranche combinée, et

b) pour le décodage
- la récupération des tranches transposées, sur base de la décompression de bits présents dans les tranches combinées reçues.

Grâce à l'adjonction respective d'une fraction de tranche à chaque tranche, à la transposition, et à la compression, la tâche du décodage est rendue très compliquée si l'on ne possède pas la clef du décodage.

La présente invention concerne aussi un module décodeur agencé pour le décodage d'un signal audio codé par application du procédé suivant l'invention.

Le module décodeur suivant l'invention comporte :
- des moyens de transposition agencés pour effectuer une transposition inverse de tranches transposées en tranches qui restituent l'ordre initial des bits,
- des moyens de conversion agencés pour convertir les tranches restituant l'ordre initial des bits en un signal audio analogique, et
- des moyens de récupération et de décompression agencés pour récupérer des tranches transposées susdites par décompression des bits présents dans les tranches combinées reçues.

D'autres détails et particularités de l'invention ressortiront de la description des dessins annexés au présent mémoire et qui illustrent, à titre non limitatif, le procédé suivant l'invention.

La figure 1 est un schéma bloc illustrant le procédé tel qu'appliqué aux informations vidéo pour la télévision "à péage".

La figure 2 est un schéma illustrant un mode d'application possible du procédé de codage d'un signal vidéo de télévision.

La figure 3 est un schéma illustrant un mode d'application possible de codage du signal audio en synchronisation avec le signal vidéo suivant l'invention.

La figure 4 est un schéma illustrant le décodage des informations audio codées comme représenté à la figure 3.

L'invention a pour but de permettre l'utilisation d'une conversion sous forme de signaux numériques de signaux analogiques audio, dont on désire assurer la confidentialité. Le passage à la forme numérique pour effectuer un codage et décodage offre une très grande sécurité mais n'a pu jusqu'à présent être mis en oeuvre dans des réalisations du genre "grand public" à cause d'un coût extrêmement élevé.

Il est toutefois apparu récemment dans le domaine de la télévision, des ensembles de circuits intégrés pour le traitement numérique des signaux par exemple dans un récepteur de télévision. Ces ensembles permettent à partir d'un ou de signaux analogiques, la conversion sous forme numérique, un traitement approprié et ensuite une reconversion sous forme analogique afin de disposer en amont et en aval de ces circuits, du ou des signaux analogiques classiques.

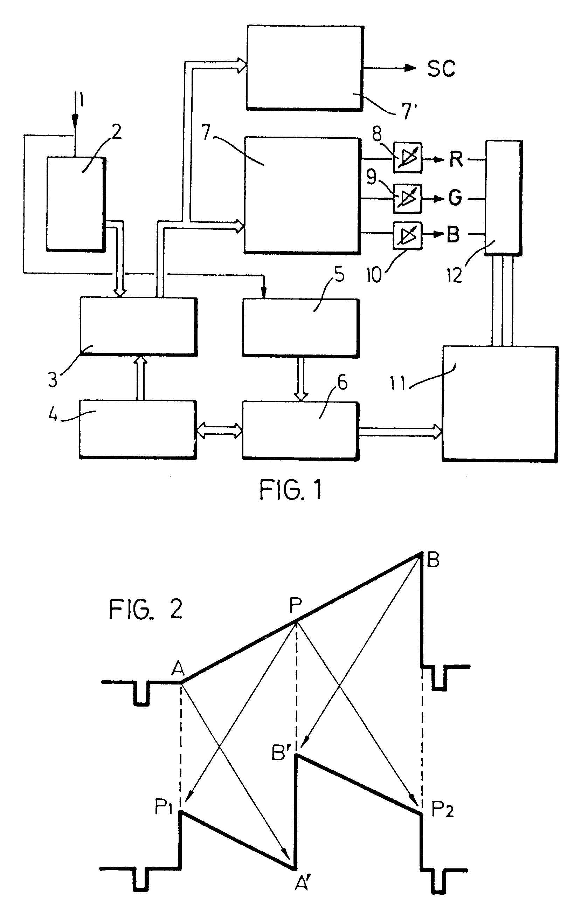

Comme illustré à la figure 1, le procédé de codage et de décodage des informations vidéo, en particulier pour un système de télévision à péage, consiste à intervenir dans le parcours normal des signaux numériques dans un ensemble de circuits intégrés tel que défini ci-avant. En considérant que le schéma bloc de la figure 1 illustre une partie d'un récepteur de télévision, le signal vidéo composite est appliqué en 1 à un convertisseur analogique-numérique, à partir duquel on prélève les signaux numériques pour les appliquer en 3 à une mémoire de lignes associée à un générateur de séquences pseudo-aléatoire 4. Les données numériques correspondant à chaque ligne vidéo sont donc d'abord mémorisées suivant leur séquence incidente dans la mémoire de lignes 3. Lorsqu'il s'agit d'un signal de télévision dit "à péage", celui-ci a été codé lors de l'émission et les données mémorisées dans la mémoire 3 ne peuvent donc pas permettre l'obtention directe d'un signal intelligible pour les autres circuits de l'appareil récepteur de télévision. Pour décoder le signal représenté par les données mémorisées, le générateur de séquences pseudo-aléatoire 4 commande une séquence de lecture dans la mémoire 3 qui correspond à celle adoptée pour le codage dans l'émetteur de télévision. Le résultat de cette lecture est donc une succession de données numériques représentant à nouveau le signal vidéo primitif sous sa forme intelligible, qui est appliqué aux circuits de traitement numérique et à un convertisseur numérique-analogique représenté par le bloc 7 à la figure 1 et faisant partie des circuits numériques normalement prévus dans le récepteur. A la sortie du convertisseur numérique-analogique du bloc 7, on obtient des signaux R (rouge), G (vert) et B (bleu) appliqués respectivement à des amplificateurs 8, 9 et 10 et destinés à l'affichage sur le moyen d'affichage du récepteur. On peut également prévoir comme montré à la figure 1, un décodeur comprenant un convertisseur numérique-analogique 7' fournissant à sa sortie un signal vidéo composite SC permettant d'attaquer un appareil à entrée vidéo composite, tel que magnétoscope, récepteur de télévision.

Il sera évident que pour effectuer le codage, le procédé suivi est identique, à l'exception du fait que la mémoire reçoit comme signal incident le signal vidéo primitif intelligible qui est lu sous la commande d'un générateur de séquences pseudo-aléatoire pour donner comme résultat de lecture le signal transposé et donc devenu inintelligible qui sera reconverti sous forme analogique permettant son émission par un émetteur de télévision normal.

Pour permettre le décodage, le procédé doit donc faire appel à des générateurs de séquences pseudo-aléatoires identiques pour le codage et le décodage, cette identité signifiant un même polynôme, un même mot d'initialisation et une même horloge de cadencement synchrone. Il faut donc transmettre une série de données (mot d'initialisation) au générateur de séquences pseudo-aléatoire d'un récepteur.

A cette fin, on transmet ces données avec le signal vidéo vers le récepteur et dans ce dernier, comme illustré à la figure 1, on prélève le signal vidéo composite appliqué en 1 avant sa conversion analogique-numérique pour l'appliquer à un récepteur de ces données spéciales 5. Celui-ci les isole du signal incident et les applique à un microprocesseur 6 qui assure l'initialisation du générateur de séquences pseudo-aléatoire 4.

La présence de cette voie de transmission permet en outre éventuellement d'envoyer vers le récepteur des informations complémentaires qui seront traitées par le micro-processeur 6 pour être appliquées à des circuits de traitement et de conversion numérique-analogique 11 pour être envoyées à un commutateur vidéo 12 qui reçoit également les signaux des amplificateurs 8, 9, 10. A l'aide du commutateur 12, on peut donc soit afficher les signaux provenant de ces derniers amplificateurs, soit ceux provenant des circuits 11 ou encore les superposer mutuellement. La sortie du commutateur vidéo 12 est donc envoyée aux circuits et moyens d'affichage du récepteur, tels qu'un tube cathodique.

On décrira à présent plus en détail le principe du codage de l'information vidéo et une forme particulière de celui-ci illustrée par la figure 2.

Ce principe est basé sur la possibilité de mémoriser une ligne vidéo complète sous forme de données numériques.

Le codage, c'est-à-dire la transformation du signal vidéo analogique dépendra uniquement de la façon dont les données numériques mémorisées sont lues dans la mémoire avant d'être reconverties sous une forme analogique pour leur transmission.

La séquence de lecture se termine dans la transformation et cette séquence peut être déterminée par une suite de valeurs fournies par un générateur pseudo-aléatoire. Ce dernier peut fournir pour chaque ligne mémorisée une suite de valeurs différentes.

Le cas le plus simple d'un tel codage est une lecture en sens opposé à celui de l'écriture de la mémoire, l'adresse de départ de lecture correspondant alors à la dernière adresse d'écriture (dernière donnée numérique de la ligne vidéo), le compteur de lecture diminuant alors à chaque lecture de la mémoire.

Le codage correspondant à une telle lecture est une inversion temporelle du signal analogique. Dans ce cas, le générateur pseudo-aléatoire sera utilisé pour déterminer quelles sont les lignes inversées ou non dans chaque trame.

Le système peut même utiliser, si on le désire, un brouillage différent à chaque ligne qui sera choisi par exemple de façon pseudo-aléatoire. Ceci nécessite deux types de valeurs fournies par le générateur, l'une déterminant le type de codage pour chaque ligne vidéo et l'autre l'adresse ou la suite d'adresses de lecture de la mémoire pour chaque ligne.

En se référant à la figure 2, on décrira à présent un cas de codage particulier constitué par une double inversion, pour laquelle la ligne vidéo s'étendant de A à B est divisée en deux parties par un point P défini de façon pseudo-aléatoire, les parties de ligne AP et PB situées de part et d'autre du point P, étant alors inversées tout en restant à leur place respective. Ainsi, après lecture, le segment AP devient le segment P1A' et le segment PB devient le segment P2B'.

Il n'y a pas de permutation de morceaux de lignes et on obtient un brouillage très efficace sur le plan visuel.

Un tel type de codage nécessite une double mémoire de ligne 3, une pour la mémorisation et une seconde pour la lecture . En effet, dans cet exemple, il est nécessaire d'attendre la mémorisation complète de la ligne en cours pour effectuer la restauration temporelle. La mémoire étant donc remplie au moment où commence le traitement de décodage, il est indispensable de mémoriser la ligne suivante dans une autre mémoire pendant que l'on lit la ligne qui a été mémorisée précédemment, d'où la nécessité d'aiguiller les données vers cette seconde mémoire, la fin de la lecture correspondant alors à l'apparition d'une nouvelle ligne qui pourra de nouveau être mémorisée dans la première mémoire pendant que la seconde est en cours de lecture et ainsi de suite.

Si pour la télévision à péage, il est déjà très intéressant de disposer du codage et du décodage fiables des informations vidéo, il est évident qu'il est préférable de coder et de décoder également les informations audio conjointement avec les informations vidéo, et ce pour empêcher que l'on puisse avoir accès aux informations audio, en l'absence d'un système permettant le décodage.

Pour le brouillage des informations audio, on peut utiliser soit un système analogique, tel que l'inversion du spectre ou la superposition au signal original d'un signal sinusoïdal basse fréquence (ronflement), qui est extrêmement peu fiable vis-à-vis des fraudeurs, soit un système numérique qui fait appel à la conversion du signal analogique en signaux numériques, ces derniers étant alors brouillés avant la reconversion en signaux analogiques pour la transmission.

Comme pour les informations vidéo, l'inconvénient majeur de ce système numérique réside dans son coût de revient élevé, disproportionné pour l'exploitation normale d'une télévision à péage et qui est dû à l'utilisation de convertisseurs analogiques/numériques et numériques/analogiques rapides et de mémoires RAM rapides.

On a déjà envisagé, comme brouillage, de transmettre les informations audio sous forme numérique soit dans l'intervalle de suppression horizontale et verticale, soit via un canal de transmission auxiliaire. Toutefois, ce mode de transmission présente l'inconvénient majeur que les signaux transmis ne respectent pas les normes de télévision et entraînent de ce fait soit une modification des moyens d'émission, ce qui n'est pas souhaitable, soit la mise en oeuvre de moyens supplémentaires aux moyens d'émission classiques.

Tout comme pour le codage et le décodage des informations vidéo, le procédé suivant l'invention fait appel, pour le codage et le décodage des informations audio, à un ensemble de circuits intégrés pour le traitement des signaux, connu notamment dans un récepteur de télévision, qui permet, à partir d'un signal analogique, la conversion sous forme numérique, conversion suivie par un traitement approprié du signal numérique et une reconversion sous forme analogique pour disposer du signal analogique classique en amont et en aval desdits circuits.

Donc le procédé suivant l'invention prévoit, pour le codage et le décodage audio, de travailler suivant le principe décrit ci-avant pour le codage et le décodage vidéo, à savoir convertir le signal audio analogique en signal numérique, de coder ce dernier et de le reconvertir en signal analogique pour sa transmission.

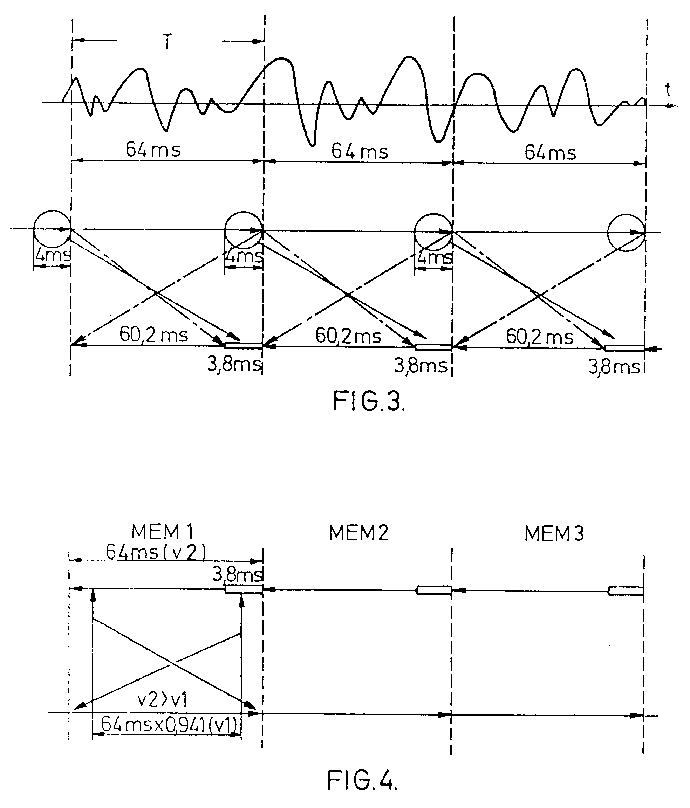

Pour éviter les distorsions résultant généralement des manipulations effectuées sur un signal audio numérique, le procédé suivant l'invention prévoit pour le codage dudit signal audio, comme illustré à la figure 3 et après transformation du signal analogique en signal numérique, de définir une période de temps de base, par exemple une période T choisie en fonction d'un compromis entre la qualité du brouillage et le coût entraîné par le nombre de mémoires. Plus la période T est grande, meilleur est le brouillage, mais en fonction du coût des mémoires il est intéressant de limiter, comme bon compromis, T à 64 millisecondes (ms). Cette période T étant choisie, on découpe virtuellement, en fonction de celle-ci, le signal sous forme de données numériques en tranches identiques correspondant dans l'exemple illustré à T. On transpose alors l'ordre des informations de chaque tranche, on comprime les informations transposées de chaque tranche conjointement avec une fraction de tranches immédiatement voisines et on retransforme les données numériques traitées en signal analogique pour la transmission, le supplément d'informations compris dans chaque tranche, grâce à la compression des informations, est mis à profit pour permettre le recouvrement intégral des informations, aux frontières de chaque tranche, lors du décodage. Pour réaliser la compression précitée des informations lors du codage, on mémorise successivement les informations transposées, par retournement, à une vitesse $v_1$ et on les lit à une vitesse $v_2$ qui est supérieure à $v_1$. Tandis qu'au décodage, le processus est inverse. On mémorise successivement les informations à la vitesse $v_2$ qui sont relues à la vitesse inférieure $v_1$, ce qui permet une expansion temporelle du signal qui correspond exactement à la compression réalisée lors du codage.

Pour la mise en oeuvre du procédé suivant l'invention, en ce qui concerne le codage et le décodage audio, on fournit le signal audio analogique à un circuit convertisseur à travers un ampli opérationnel adaptateur d'impédance. Le signal numérique, à la sortie du circuit convertisseur, est envoyé à un convertisseur série parallèle qui alimente les mémoires. Celles-ci, tout comme pour le brouillage du signal vidéo, sont en nombre suffisant pour assurer les écritures et lectures simultanées du signal audio, la seule différence résidant, comme exposé ci-dessus, dans les variations de vitesses d'écriture et de lecture qui assurent les compression et expansion temporelles précitées.

Le rapport entre ces vitesses exprime le taux de compression adopté, qui est de 0,941 dans le cas illustré aux figures 3 et 4. Ce taux de compression peut, bien entendu, être modifié par simple changement de l'horloge des circuits, pour autant qu'il se situe dans les limites définies par les caractéristiques de ces derniers et celles de la bande passante disponible pour la transmission du signal.

Compte tenu du rôle de la compression temporelle du signal audio exposé ci-dessus et du fait que le retournement des informations audio peut provoquer l'apparition de transitions importantes qui seront dégradées pendant la transmission, le choix d'un taux de compression de 0,941 et d'une période T de 64 ms, comme montré à la figure 3, donne une nouvelle période comprimée de 60 ms qui permet d'utiliser les 4 ms restantes, soit 3,8 ms environ après compression, pour envoyer des informations correspondant à la fin de la période précédente.

Pour la bonne synchronisation du décodeur audio, le codeur relève l'état des compteurs d'adresses des mémoires du codeur correspondant à l'apparition de l'impulsion de synchronisation verticale du signal vidéo. L'état desdits compteurs est transmis au décodeur pour qu'il positionne ses propres compteurs dans un même état en tenant compte toutefois de l'intervalle de temps correspondant à deux trames (40 ms) existant entre le relevé du codeur et la prise en compte du décodeur.

Les traitements subis par le son le retardant par rapport à l'image, on fait subir au signal vidéo avant la reconversion sous forme analogique un retard correspondant.

Le processus du décodeur étant inverse de celui du codeur, le signal analogique reçu est transformé en signal numérique pour être ensuite mémorisé, comme montré à la figure 4, dans la mémoire 1 (MEM 1) à la vitesse $v_2$, stocké dans la mémoire 2 (MEM 2) pour y être relu, à la vitesse $v_1$ inférieure à $v_2$ pour réaliser l'expansion temporelle correspondant à la compression temporelle réalisée lors du codage. Comme montré à la figure 4, la lecture commence à l'adresse prédéterminée dans le décodeur par câblage et qui correspond approximativement à la moitié de la période de 3,8 ms (période de 4 ms comprimée).

Le décomptage (lecture + expansion) commençant à l'adresse prédéterminée susdite dure 64 ms, c'est-à-dire la période T, ce qui a pour effet de conserver une partie des informations au-delà des 64 ms non utilisées.

Il est à noter que si les temps de parcours entre la vidéo (impulsions de synchronisation verticale du signal) et l'audio sont différents, notamment suivant les modes de transmission des deux signaux, le système n'est pas perturbé au décodage, dans une marge de

$$\frac{3,8\,ms}{2}.$$

Dans le cas de l'application du procédé suivant l'invention à un système de télévision dit "à péage", le procédé de décodage peut être mis en oeuvre à la réception sous différentes formes.

En premier lieu, on peut envisager dans le cas de récepteurs de télévision qui comprennent déjà le traitement sous forme numérique soit de l'information vidéo, soit des informations vidéo et audio transmises, de leur incorporer un module décodeur avec les circuits nécessaires pour la mise en oeuvre du procédé de décodage, ce module étant interposé après l'étage de conversion analogique-numérique du récepteur.

Lorsque les récepteurs de télévision concernés ne comprennent pas un tel traitement sous forme numérique des informations, mais possèdent une sortie et une entrée pour les signaux normalement destinées à la connexion d'un magnétoscope, on peut concevoir un appareil décodeur comprenant un système de traitement numérique du signal analogique incident, dans lequel est interposé un module décodeur connecté après l'étage de conversion analogique-numérique du système, tandis que la sortie de l'étage numérique-analogique est envoyée à l'entrée vidéo du récepteur.

Enfin, lorsque l'appareil récepteur de télévision ne comprend ni traitement sous forme numérique, ni entrée et sortie pour le signal vidéo, l'appareil décodeur comprendra des circuits de réception nécessaires pour le signal de télévision incident, provenant de l'antenne ou d'un réseau de télédistribution, dont la sortie sera appliquée au système de traitement numérique du signal analogique, dans lequel est interposé le module décodeur mettant en oeuvre le procédé suivant l'invention, et dont l'étage de conversion numérique-analogique est connecté à des moyens de conversion permettant de fournir à l'appareil récepteur le signal incident pour lequel ce dernier est conçu.Il est clair d'après la description qui précède que l'on peut utiliser pour la mise en oeuvre du procédé suivant l'invention, tout ensemble de circuits assurant une conversion analogique numérique, suivie par une reconversion sous forme analogique. Un exemple d'un tel ensemble de circuits numériques est celui destiné à la réalisation d'un téléviseur "grand public" à traitement numérique du signal vidéo et du signal audio, produit par la firme ITT Intermail de Freiburg, République Fédérale allemande, sous le nom de "System Digit 2000".

## Revendications

1. Procédé de codage et de décodage d'un signal audio dans un système de transmission d'informations, en particulier d'un signal audio compris dans un signal de télévision et plus particulièrement pour la télévision à péage, comportant :
    a) pour le codage
        - la conversion d'un signal audio analogique à transmettre en un signal audio numérique,
        - le découpage du signal audio numérique en tranches égales,
        - la transposition de l'ordre des bits de chaque tranche afin de former chaque fois une tranche transposée,
    b) pour le décodage
        - la transposition inverse de tranches transposées en tranches qui restituent l'ordre initial des bits, et
        - la conversion des tranches restituant l'ordre initial des bits en un signal audio analogique,
    caractérisé en ce qu'il comporte en outre :
    a) pour le codage
        - le prélèvement d'une fraction prédéterminée d'une tranche transposée immédiatement adjacente,
        - la formation d'une tranche combinée comportant la tranche transposée et ladite fraction prédéterminée, et

        - la compression de la tranche combinée, et
    b) pour le décodage
        - la récupération des tranches transposées, sur base de la décompression de bits présents dans les tranches combinées reçues.

2. Procédé suivant la revendication 1, caractérisé en ce qu'il comporte la détermination d'une période de temps de base (T) et le découpage du signal audio précité en tranches susdites en fonction de ladite période de base.

3. Procédé suivant l'une ou l'autre des revendications 1 et 2, caractérisé en ce que ladite transposition comporte le stockage dans une mémoire des bits dans l'ordre qu'ils occupent dans la tranche susdite et la lecture des mêmes bits dans l'ordre inverse de celui du stockage.

4. Procédé suivant l'une quelconque des revendications 1 à 3, caractérisé par le prélèvement de la fraction de tranche susdite à partir de la tranche contiguë précédente.

5. Procédé suivant l'une quelconque des revendications 1 à 4, caractérisé en ce qu'il comporte, pour le décodage, l'utilisation de ladite fraction de tranche comprimée pour assurer un recouvrement intégral aux frontières de chaque tranche, en reproduisant en double la fraction comprimée précitée auxdites frontières.

6. Procédé suivant l'une quelconque des revendications 1 à 5, caractérisé en ce que la compression précitée comporte la mémorisation successive des données contenues dans une tranche transposée à une cadence déterminée ($v_1$) et la lecture de ces données mémorisées à une cadence ($v_2$) supérieure à la cadence déterminée ($v_1$) et en ce que la décompression susdite comporte la mémorisation successive à la cadence supérieure ($v_2$) des données d'une tranche combinée et la lecture de ces dernières données mémorisées à la cadence déterminée ($v_1$) afin d'obtenir une expansion du signal correspondant à la compression du codage.

7. Procédé suivant l'une quelconque des revendications 1 à 6, caractérisé en ce qu'il comporte en outre, pour le traitement du signal audio, la mémorisation alternée de groupes d'informations de longueurs égales successifs dans au moins deux mémoires distinctes de manière à permettre le traitement du contenu d'une mémoire pendant que l'autre mémoire est en cours de réception de groupes d'informations suivants.

8. Module décodeur agencé pour le décodage d'un signal audio codé par application du procédé suivant l'une quelconque des revendications 1 à 7, caractérisé en ce qu'il comprend :
   - des moyens de transposition agencés pour effectuer une transposition inverse de tranches transposées en tranches qui restituent l'ordre initial des bits, et
   - des moyens de conversion agencés pour convertir les tranches restituant l'ordre initial des bits en un signal audio analogique, et
   - des moyens de récupération et de décompression agencés pour récupérer des tranches transposées susdites par décompression des bits présents dans les tranches combinées reçues.

9. Récepteur de télévision comprenant un module décodeur suivant la revendication 8, caractérisé en ce que le module comprend une entrée numérique reliée à une sortie du convertisseur analogique/numérique du récepteur de télévision.

10. Appareil décodeur comprenant un module décodeur suivant la revendication 8 et un convertisseur analogique/numérique, caractérisé en ce que le module comprend une entrée numérique reliée à la sortie dudit convertisseur analogique/numérique.

**Claims**

1. A method of encoding and decoding an audio signal in a data transmission system, more particularly an audio signal forming part of a television signal, more particularly for pay TV, comprising:
   a) for encoding:

   the conversion of an analog audio signal which it is required to transmit into a digital audio signal;

   chopping the digital audio signal into equal portions, and

   transposing the order of the bits of each portion in order to form a transposed portion in each case,
   b) for decoding:

   the inverse transposition of transposed portions into portions restoring the initial order of the bits, and

   conversion of the portions restoring the initial order of the bits into an analog audio signal,
   characterised in that it also comprises:
   a) for encoding:

   sampling a predetermined fraction of an immediately adjacent transposed portion;

   forming a combined portion comprising the transposed portion and the predetermined fraction, and

   compressing the combined portion, and
   b) for decoding:

   restoration of the transposed portions on the basis of the decompression of bits present in the received combined portions.

2. A method according to claim 1, characterised in that it comprises determining a basic time period (T) and chopping the audio signal into portions in dependence upon the base period.

3. A method according to claim 1 and/or 2, characterised in that the transposition comprises storing the bits in a memory in the order which they occupy in the portion and reading out the same bits in the reverse order to the storage order.

4. A method according to any of claims 1 to 3, characterised by the sampling of the portion fraction from the preceding contiguous portion.

5. A method according to any of claims 1 to 4, characterised in that it comprises for decoding the use of the compressed portion fraction to provide integral overlapping at the frontiers of each portion with dual reproduction of the compressed fraction at the frontiers.

6. A method according to any of claims 1 to 5, characterised in that the compression comprises consecutive storage of the data contained in a transposed portion at a predetermined cadence $(v_1)$ and reading out these stored data at a cadence $(v_2)$ greater than the predetermined cadence $(v_1)$, and the decompression comprises consecutive storage at the higher cadence $(v_2)$ of the data of a combined portion and reading out the latter stored data at the predetermined cadence $(v_1)$ in order to produce an expansion of the signal corresponding to the encoding compression.

7. A method according to any of claims 1 to 6, characterised in that it also comprises for processing the audio signal the alternate storage of consecutive data groups of equal lengths in at least two different memories to enable the contents of one memory to be processed while the other memory is receiving subsequent data groups.

8. A decoding module adapted to decode an audio signal encoded by means of the method according to any of claims 1 to 7, characterised in that it comprises:

   transposing means adapted to effect a reverse transposition of transposed portions into portions restoring the initial bit order;

   converting means adapted to convert the portions restoring the initial bit order into an analog audio signal, and

   restoring and decompressing means adapted to restore from the transposed portions by decompression bits present in the received combined portions.

9. A television receiver comprising a decoding module according to claim 8, characterised in that the module comprises a digital input connected to an output of the analog-digital converter of the television receiver.

10. A decoding apparatus comprising a decoding module according to claim 8 and an analog-digital converter, characterised in that the module comprises a digital input connected to the output of the analog-digital converter.

**Patentansprüche**

1. Verfahren zur Kodierung und Dekodierung eines Audiosignales in einem Nachrichtenübertragungssystem, insbesondere eines in einem Fernsehsignal enthaltenen Audiosignales, insbesondere für Gebührenfernsehen, enthaltend:
   a) zur Kodierung
      - die Umwandlung eines zu übertragenden analogen Audiosignales in ein digitales Audiosignal,
      - die Zerlegung des digitalen Audiosignales in gleiche Abschnitte,
      - die Transposition der Bitfolge jedes Abschnittes, um jedes Mal einen transponierten Abschnitt zu bilden,
   b) zur Dekodierung

      - die inverse Transposition der transponierten Abschnitte in Abschnitte, in denen die ursprüngliche Reihenfolge der Bits rekonstruiert ist, und
      - die Umwandlung der rekonstruierten Abschnitte mit der ursprünglichen Reihenfolge der Bits in ein analoges Audiosignal,
   dadurch gekennzeichnet, daß es außerdem beinhaltet:
      a) zum Kodieren
         - die Abnahme eines festgelegten Teiles eines unmittelbar benachbarten transponierten Abschnittes,
         - die Bildung eines kombinierten Abschnittes, der den transponierten Abschnitt und den besagten festgelegten Teil enthält, und
         - die Kompression des kombinierten Abschnittes, und
      b) zum Dekodieren
         - die Wiedergewinnung der transponierten Abschnitte auf der Basis der Dekompression der in den empfangenen kombinierten Abschnitten vorhandenen Bits.

2. Verfahren nach Anspruch 1, dadurch gekennzeichnet, daß es die Bestimmung einer Basiszeitkonstante (T) und die Zerlegung des vorgenannten Audiosignales in obengenannte Abschnitte als Funktion der besagten Basisperiode enthält.

3. Verfahren nach dem einen oder dem anderen der Ansprüche 1 und 2, dadurch gekennzeichnet, daß die genannte Transposition das Einspeichern der Bits in einen Speicher in der Reihenfolge, die diese in dem obengenannten Abschnitt einnehmen, und das Lesen derselben Bits in der umgekehrten Reihenfolge als beim Einspeichern enthält.

4. Verfahren nach irgendeinem der Ansprüche 1 bis 3, gekennzeichnet durch die Abnahme des Teils des obengenannten Abschnittes von dem angrenzenden vorhergehenden Abschnitt.

5. Verfahren nach irgendeinem der Ansprüche 1 bis 4, dadurch gekennzeichnet, daß es zum Dekodieren den Gebrauch des besagten Teils des komprimierten Abschnittes enthält, um eine vollständige Überlappung an den Grenzen jedes Abschnittes sicherzustellen, den vorgenannten komprimierten Teil an den besagten Grenzen doppelt reproduzierend.

**6.** Verfahren nach irgendeinem der Ansprüche 1 bis 5,
dadurch gekennzeichnet, daß die vorgenannte Kompression die sukzessive Speicherung der in einem transponierten Abschnitt enthaltenen Daten mit einem bestimmten Arbeitstakt ($v_1$) und das Lesen dieser gespeicherten Daten mit einem höheren Arbeitstakt ($v_2$) als dem bestimmten Arbeitstakt ($v_1$) enthält, und daß die obengenannte Dekompression die sukzessive Speicherung der Daten eines kombinierten Abschnittes mit dem höheren Arbeitstakt ($v_2$) und das Lesen dieser letzterer gespeicherter Daten mit dem bestimmten Arbeitstakt ($v_1$) enthält, um eine Expansion des Signales zu erzielen, die der Kompression beim Kodieren entspricht.

**7.** Verfahren nach irgendeinem der Ansprüche 1 bis 6,
dadurch gekennzeichnet, daß es außerdem zur Verarbeitung des Audiosignales die alternierende Speicherung von aufeinanderfolgenden Informationsgruppen gleicher Längen in mindestens zwei verschiedenen Speichern enthält, derart, um die Verarbeitung des Inhaltes des einen Speichers zu erlauben, während dem der andere Speicher beim Empfang von nachfolgenden Informationsgruppen ist.

**8.** Zum Dekodieren eines kodierten Audiosignales durch Anwendung des Verfahrens nach irgendeinem der Ansprüche 1 bis 7 eingerichtetes Dekodiermodul,
dadurch gekennzeichnet, daß es enthält:
- zum Durchführen einer inversen Transposition der transponierten Abschnitte in Abschnitte, in denen die ursprüngliche Reihenfolge der Bits wiederhergestellt ist, eingerichtete Transpositionsmittel,
- zum Umwandeln der in der ursprünglichen Reihenfolge der Bits wiederhergestellten Abschnitte in ein analoges Audiosignal eingerichtete Umwandlungsmittel, und
- zum Wiedergewinnen der obengenannten transponierten Abschnitte durch Dekompression der in den empfangenen kombinierten Abschnitten vorhandenen Bits eingerichtete Wiedergewinnungs- und Dekompressionsmittel.

**9.** Fernsehempfänger mit einem Dekodiermodul nach Anspruch 8,
dadurch gekennzeichnet, daß das Modul einen digitalen Eingang enthält, der mit einem Ausgang des A/D-Wandlers des Fernsehempfängers verbunden ist.

**10.** Dekodiervorrichtung mit einem Dekodiermodul nach Anspruch 8 und einem A/D-Wandler,
dadurch gekennzeichnet, daß das Modul einen digitalen Eingang aufweist, der mit dem Ausgang des besagten A/D-Wandlers verbunden ist.

FIG. 1

FIG. 2

FIG.3.

FIG.4.